# EUROPEAN PATENT SPECIFICATION

(11) **EP 0 390 440 B1**
(45) Date of publication and mention of the grant of the patent: **08.06.1994**
(21) Application number: 90303143.3
(22) Date of filing: 23.03.1990
(51) Int. Cl.: F16H 1/445

(54) **Differential gear mechanism**
Differentialgetriebe
Engrenage différentiel

(30) Priority: 27.03.1989 JP 34418/89
(43) Date of publication of application: 03.10.1990
(73) Proprietor: DIESEL KIKI CO., LTD., Shibuya-ku Tokyo (JP)
(72) Inventor: Sato, Kazuhiko, c/o Diesel Kiki Co. Ltd., Konan-machi, Osato-gun, Saitama (JP)
(74) Representative: Rackham, Stephen Neil

(56) References cited:
- EP-A- 0 130 806
- DE-A- 2 334 043
- DE-C- 3 438 257
- US-A- 1 312 856
- US-A- 3 735 647
- J.LOOMAN Zahnradgetriebe p.235 Springer Berlin 1970

## Description

The present invention relates to a differential gear mechanism.

An example of a prior art relevant to the present invention has been shown in the US-A-3884096 (& DE-A-2334043).

The differential gear mechanism disclosed in these specifications comprises a differential case which rotates driven from outside;
a pair of worm gears provided in the differential case and each connected to different axle shafts, the worm gears being arranged coaxially and rotatable independently; and,
at least one pair of element gears each composed of a worm wheel and spur gears provided on both sides of the worm wheel, the spur gears of each pair of element gears being engaged with one another, the worm wheels being engaged with their respective worm gears and being supported rotatably by the differential case.

This differential gear mechanism compensates a rotation difference between two axle shafts such as a conventional differential gear mechanism, and what is more, distributes large drive torque to an axle shaft with slower rotation by automatically varying a distribution of torque to the axle shafts. That is, the differential gear mechanism transmits larger torque to an axle shaft with larger resistance than that of the other axle shaft with smaller resistance, according to certain torque bias ratio which is decided by a lead angle of the worm gears and the friction state during driving of the worm gears.

However, in such differential gear mechanism, when one wheel is disengaged and causes skidding to make resistance to one axle shaft zero, torque is not transmitted to the other axle shaft. Because of this, there was a problem that a vehicle could not get out from the skidding state without an aid.

The document DE-A-2334043 discloses a differential gear assembly according to the preamble of claim 1. In "Looman, Zahnradgetriebe" Berlin 1970, on page 235 is shown a differential in which side gears are releasably locked together by an internal spline arrangement which is controlled by means of a spring lever acting on a shaft.

According to the present invention, a differential gear mechanism comprises a differential case which rotates driven from outside, a pair of worm gears provided in the differential case and each connected to different coaxial axle shafts, the worm gears being arranged coaxially and rotatable independently, at least one pair of element gears each composed of a worm wheel and spur gears provided on both sides of the worm wheel, the spur gears of each pair of element gears being engaged with one another, the worm wheels being engaged with their respective worm gears and being supported rotatably by the differential case and is characterised in that clutch means are provided between the worm gears coaxially with the worm gears for releasably locking them together, wherein the clutch means includes first and second gear wheels provided between said worm gears coaxially with the worm gears the first gear wheel being provided to rotate with one of the worm gears and the second gear wheel being provided to rotate with the other of the worm gears and a clutch ring which is provided between the worm gears movable in the axial direction of the worm gears and is engaged with the first and/or second gear wheels, axial movement of the clutch ring connecting and disconnecting the first and second gear wheels and thereby locking and unlocking the worm gears.

With such a construction, when one and the other of the worm gears are made into the connected state by the clutch means, the differential gear mechanism is locked-up , by which, even if one of axle shafts is made into the skidding state, drive torque is transmitted to the other of axle shafts. Accordingly, it is possible to get out from the skidding state without an aid.

Particular embodiments of a differential mechanism in accordance with this invention will now be described with reference to the accompanying drawings; in which:-
Figure 1 is a cross section of a first embodiment;
Figure 2 is a section taken along line A-A shown in Figure 1; and,
Figure 3 is a side elevation showing a major part of another embodiment.

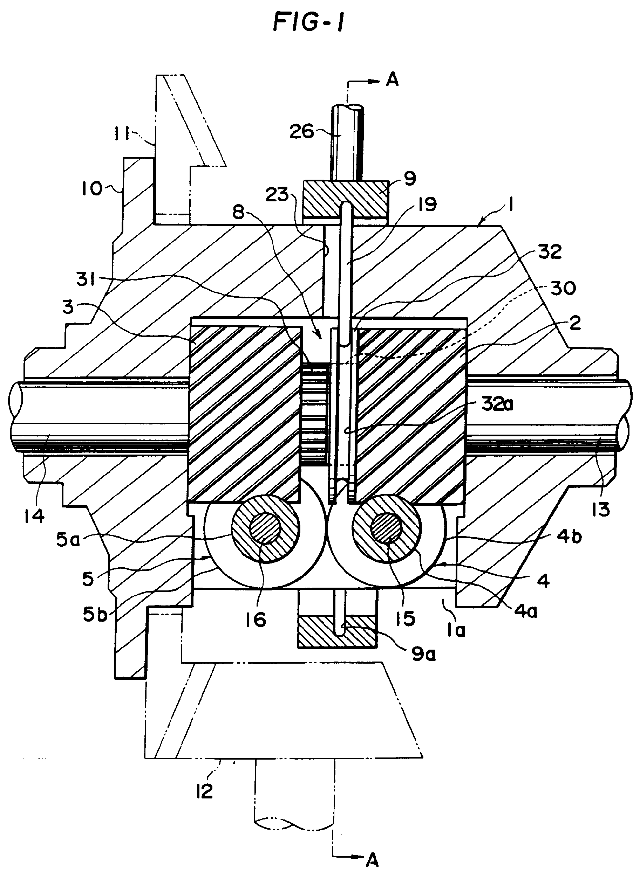

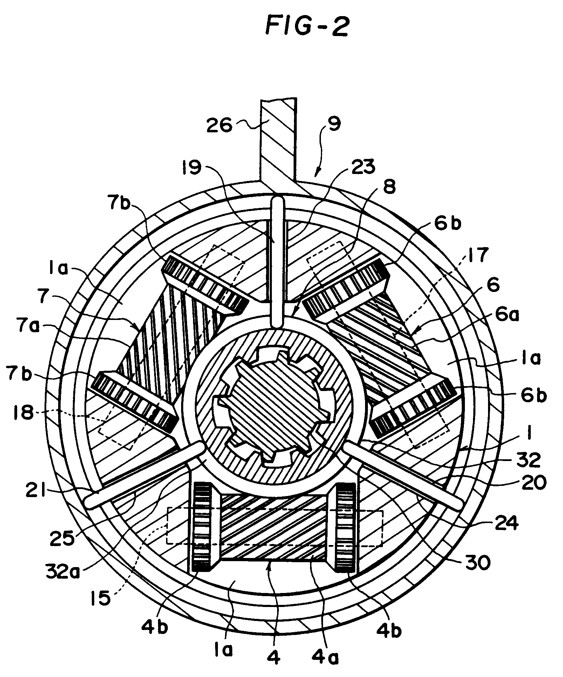

In Fig. 1 and Fig. 2, reference numeral 1 is a differential case, reference numerals 2 and 3 are worm gears, reference numerals 4, 5, 6 and 7 are element gears, reference numeral 8 is a dog clutch, and reference numeral 9 is a ring member.

The differential case 1 has three openings 1a for attaching element gears, which are formed with a 120° spacing against the center axis, and provides a flange 10 at the outside circumferential face thereof. A ring gear 11 is fixed to the flange 10. The differential case 1 rotates driven externally by engagement of the ring gear 11 and a drive pinion 12.

The worm gears 2 and 3 are arranged coaxially within the differential case 1, and are rotatable independently. The worm gears 2 and 3 are connected respectively to axle shafts 13 and 14 by spline connection, and the axle shafts 13 and 14 rotate by rotation of these worm gears 2 and 3.

The element gears 4 through 7 have worm wheels 4a, 5a, 6a and 7a, and spar gears 4b, 5b, 6b and 7b each provided on both sides of the worm wheels 4a through 7a. The element gears 4 through 7 are arranged in one set of two element gears and three sets are allocated with a 120° spacing around the worm gears 2 and 3. The element gears 4 through 7 are attached rotatably to the openings 1a of the differential case 1 with journal pins 15, 16, 17 and 18. In the present embodiment, the element gears 4 and 5 are arranged in a pair, and the element gears 6 and 7 are each arranged in a pair with an element gear which is not illustrated. For the element gears 4 and 5, the spur gears 4b and 5b engage with each other, the worm wheel 4a of the element gear 4 engages with one worm gear 2, and the worm wheel 5a of the element gear 5 engages with the other worm gear 3. The same construction applies to other pairs of element gears, too.

The dog clutch 8 is provided between the worm gears 2 and 3. The dog clutch 8 has a first gear wheel 30, a second gear wheel 31 and a clutch ring 32. The first and second gear wheels 30 and 31 are provided coaxially with the worm gears 2 and 3. The first gear wheel 30 is provided in one worm gear 2, and rotates in a body with the worm gear 2. The second gear wheel 31 is provided in the other worm gear 3, and rotates in a body with the worm gear 3. The clutch ring 32 has internal gear which are engageable with the gear wheels 30 and 31 in the inside circumferential face, and is provided to be movable in the axial direction of worm gears 2 and 3. In the state shown in Fig. 1, the clutch ring 32 is engaged with the first gear wheel 30 only and rotates together with one worm gear 2. In this state, an ordinary differential action is performed. The clutch ring 32 can be moved towards the other worm gear 3, and can engage with both the first gear wheel 30 and the second gear wheel 31. By the clutch ring 32 engaging with both gear wheels 30 and 31, the worm gears 2 and 3 are made into the connected state. In this state, differential action is locked.

The clutch ring 32 provides a ring groove 32a on the outside circumferential face. Lever members 19, 20 and 21 of their one ends are fitted in the ring groove 32a of the clutch ring 32 to allow slip between the lever members 19 through 21 and the clutch ring 32. The clutch ring 32 moves together with the lever members 19 through 21 moving towards the axial direction of worm gears 2 and 3. By this, the worm gears 2 and 3 are connected, or their connection is released. The lever members 19 through 21 are provided to be movable towards the axial direction of worm gears 2 and 3 in through holes 22, 23 and 24 of the differential case 1 which are formed among the openings 1a, and rotate with the differential case 1. The lever members 19 through 21 of their one ends are fitted in the ring groove 32a of the dog clutch 8, as described above, and their other ends protrude from the outside circumferential face of the differential case 1 and are engaged with the ring member 9.

The ring member 9 is provided on the outside circumferential face of the differential case 1, and retained within an outer case (not illustrated) to be movable in the axial direction of worm gears 2 and 3. The ring member 9 provides a ring groove 9a in the inside circumferential face. The lever members 19 through 21 of their other ends are fitted in the ring groove 9a of the ring member 9 to allow slip between the lever members 19 through 21 and the ring member 9. The ring member 9 provides an operation lever 26 on the outside circumferential face. By the operation lever 26 operated, the ring member 9 is moved, and the clutch ring 32 of the dog clutch is moved via the lever members 19 through 21. By this, the worm gears 2 and 3 are connected, or their connection is released. The operation lever 26 is operated by an actuator and alike. Incidentally, the ring member 9 does not rotate.

Under the normal travel motion, there is maintained a condition that the clutch ring 32 of the dog clutch 8 is engaged only with the first gear wheel 30 of the clutch ring 32. As the worm gears 2 and 3 are each rotatable independently under this condition, normal differential operation is performed. Incidentally, even when there is generated a rotational difference between one worm gear 2 and the differential case 1 during a differential operation, no problem occurs to the differential operation, as slip occurs between the lever members 19 through 21 and the ring groove 32a of the dog clutch 8. On the other hand, when one axle shaft 14 falls into skidding because of disengagement of a wheel or an extreme muddy ground, for example, and resistance to the axle shaft 14 is made zero, the operation lever 26 is operated to make the worm gears 2 and 3 connected by means of the dog clutch 8. As the differential operation is locked by this, drive torque is transmitted to the other axle shaft 13 even with the axle shaft 14 in the complete skidding state, and thus it is possible to get out from the skidding state.

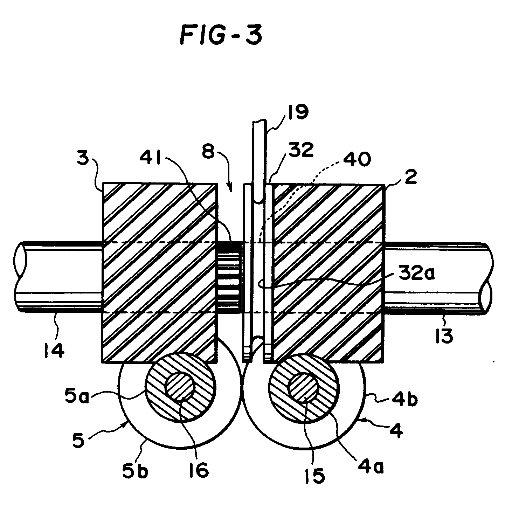

In an embodiment of Fig. 3, gear wheels 40 and 41 are formed on the axle shafts 13 and 14. The axle shafts 13 and 14 are provided piercing through the worm gears 2 and 3, and have protrusions, which oppose to each other, between the worm gears 2 and 3. The gear wheels 40 and 41 are each formed at the protrusions of axle shafts 13 and 14. By this construction, splines of the axle shafts 13 and 14 can be used as the gear wheels 40 and 41. Other configurations and operations are as described in the preceding embodiment.

## Claims

1. A differential gear mechanism comprising;
a differential case (1) which rotates driven from outside;
a pair of worm gears (2,3) provided in the differential case (1) and each connected to different coaxial axle shafts (13,14), the worm gears (2,3) being arranged coaxially and rotatable independently;
at least one pair of element gears (4,5,6,7) each composed of a worm wheel (4a,5a,6a,7a) and spur gears (4b,5b,6b,7b) provided on both sides of the worm wheel, the spur gears (4b,5b) of each pair of element gears (4,5) being engaged with one another, the worm wheels (4a,4b) being engaged with their respective worm gears (2,3) and being supported rotatably by the differential case (1);
characterised by
clutch means (8) provided between the worm gears (2,3) coaxially with the worm gears (2,3) for releasably locking them together, wherein the clutch means (8) includes:
first and second gear wheels (30,31;40,41) provided between said worm gears coaxially with the worm gears (2,3) the first gear wheel (30;40) being provided to rotate with one of the worm gears (2) and the second gear wheel (31;41) being provided to rotate with the other of the worm gears (3); and,
a clutch ring (32) which is provided between the worm gears (2,3) movable in the axial direction of the worm gears (2,3) and is engaged with the first and/or second gear wheels (30,31;40,41), axial movement of the clutch ring (32) connecting and disconnecting the first and second gear wheels (30,31;40,41) and thereby locking and unlocking the worm gears (2,3).

2. A differential gear mechanism as claimed in claim 1, wherein the first and second gear wheels (30, 31) are formed on the first and second worm gears (2,3) respectively.

3. A differential gear mechanism as claimed in claim 1, wherein the axle shafts (13,14) pass through the worm gears (2,3) and have opposing projections between the worm gears (2,3), and wherein
the gear wheels (40,41) are formed on the projections of the axle shafts (13,14).

4. A differential gear mechanism as claimed in claim 3, in which the ends of the axles (13,14) are splined and the projecting splined ends form the gear wheels (41).

5. A differential gear mechanism as claimed in claim 2, 3 or 4 wherein the differential gear mechanism further includes;
operation means (9,19,26) for operating the clutch ring (32) from the outside of the differential case (1).

6. A differential gear mechanism as claimed in claim 5, wherein the operation means include;
at least one lever member (19) which passes through the differential case (1) and is movable in the axial direction of the worm gear (2,3) the lever member (19) having one end portion fitted in a first ring groove (32a) formed in an outside circumferential face of the clutch ring (32) to allow rotational slip between them, and the other end portion protruding at an outside circumferential face of the differential case (1); and
a ring member (9) which is provided on the outside circumferential face of the differential case (1) movable in the axial direction of the worm gear (2,3) and which does not rotate with the differential case (1), the ring member providing a second ring groove (9a) in its inside circumferential face, and the other end portion of the lever member (19) being fitted in the second ring groove (9a) to allow rotational slip between them.

## Patentansprüche

1. Differentialgetriebemechanismus, umfassend:
ein Differentialgehäuse (1), das sich von aussen angetrieben dreht;
ein Paar Schneckengetriebe (2,3), die im Differentialgehäuse (1) vorgesehen und jeweils mit unterschiedlicher koaxialer Differentialseitenwelle (13,14) verbunden sind, wobei die Schneckengetriebe (2,3) koaxial angeordnet und unabhängig drehbar sind, mindestens ein Paar Zwischenräder (4,5,6,7), die jeweils aus einem Schneckenrad (4a,5a,6a,7a) und an beiden Seiten des Schneckenrads vorgesehenen Stirnrädern (4b, 5b, 6b, 7b) zusammengesetzt sind, wobei die Stirnräder (4b,5b) jedes Paares der Zwischenräder (4,5) miteinander in Eingriff stehen, und wobei die Schneckenräder (4a,4b) mit ihrem entsprechenden Schneckengetriebe (2,3) in Eingriff stehen und drehbar durch das Differentialgehäuse (1) gelagert sind, gekennzeichnet durch:
Kupplungsmittel (8), das zwischen den Schneckengetrieben (2,3) koaxial zu denselben zu ihrem lösbaren Eingriff vorgesehen sind, wobei das Kupplungsmittel (8) folgendes umfasst:
erste und zweite Getrieberäder (30,31;40,41), die zwischen den Schneckengetrieben (2,3) koaxial zu denselben vorgesehen sind, wobei das erste Getrieberad (30;40) ausgelegt ist, daß es sich mit einem der Schneckengetriebe (2) dreht und das zweite Getrieberad (31;41) ausgelegt ist, daß es sich mit dem anderen Schneckengetriebe (3) dreht;
und
einen Kupplungsring (32), der zwischen den Schneckengetrieben (2,3) vorgesehen ist und in axialer Richtung zu den Schneckengetrieben (2,3) beweglich und in Eingriff mit den ersten und/oder zweiten Getrieberädern (30,31; 40,41) ist, wobei die axiale Bewegung des Kupplungsringes (32) die ersten und zweiten Getrieberäder (30,31; 40,41) verbindet und löst und dadurch die Schneckengetriebe (2,3) in und ausser Eingriff bringt.

2. Differentialgetriebemechanismus nach Anspruch 1, bei dem die ersten und zweiten Getrieberäder (30,31) auf dem ersten bzw. zweiten Schneckengetriebe ausgebildet sind.

3. Differentialgetriebemechanismus nach Anspruch 1, bei dem die Differentialseitenwellen (13,14) durch die Schneckengetriebe (2,3) hindurchverlaufen und einander gegenüberliegende Vorsprünge zwischen den Schneckengetrieben (2,3) besitzen, und wobei die Getrieberäder (40,41) auf den Vorsprüngen der Differentialseitenwellen (13,14) ausgebildet sind.

4. Differentialgetriebemechanismus nach Anspruch 3, bei dem die Enden der Wellen (13,14) als Schiebekeil ausgebildet sind und die herausragenden Schiebekeilenden die Getrieberäder (41) bilden.

5. Differentialgetriebemechanismus nach Anspruch 2, 3 oder 4, bei dem der Differentialgetriebemechanismus ferner folgendes umfasst:
Betriebsmittel (9,19,26) zur Betätigung des Kupplungsrings (32) von ausserhalb des Differentialgehäuses (1).

6. Differentialgetriebemechanismus nach Anspruch 5, bei dem die Betriebsmittel folgendes umfassen:
zumindest ein Hebelglied (19), das durch das Differentialgehäuse (1) hindurchläuft und in der axialen Richtung des Schneckengetriebes (2,3) beweglich ist, wobei das Hebelglied (19) mit einem Endteil in einer ersten Ringnut (32a) sitzt, die an einer äusseren Umfangsfläche des Kupplungsringes (32) ausgebildet ist, um einen drehmässigen Schlupf zwischen ihnen zu gestatten und wobei der andere Endteil an einer äusseren Umfangsfläche des Differentialgehäuses (1) herausragt, und
ein Ringglied (9), das an der äusseren Umfangsfläche des Differentialgehäuses (1) beweglich in der axialen Richtung des Schneckengetriebes (2,3) vorgesehen ist, und das sich nicht mit dem Differentialgehäuse (1) dreht, und wobei das Ringglied eine zweite Ringut (9a) in seiner inneren Umfangsfläche vorsieht, und wobei der andere Endteil des Hebelgliedes (19) in der zweiten Ringnut (9a) sitzt, um einen drehmässigen Schlupf zwischen ihnen zu ermöglichen.

## Revendications

1. Mécanisme à engrenages différentiel comprenant :
un boîtier du différentiel (1) qui tourne en étant entraîné de l'extérieur;
une paire d'engrenages à vis sans fin (2, 3) disposés dans le boîtier du différentiel (1) et connectés chacun à différents arbres d'essieu coaxiaux (13, 14), les engrenages à vis sans fin (2, 3) étant disposés coaxialement et pouvant tourner indépendamment l'un de l'autre;
au moins une paire d'engrenages élémentaires (4, 5, 6, 7) composés chacun d'une roue à vis sans fin (4a, 5a, 6a, 7a) et d'engrenages droits (4b, 5b, 6b, 7b) disposés de part et d'autre de la roue à vis sans fin, les engrenages droits (4b, 5b) de chaque paire d'engrenages élémentaires (4, 5) engrenant l'un avec l'autre, les roues à vis sans fin (4a, 4b) engrenant avec leurs engrenages à vis sans fin correspondant (2, 3) et étant supportés, de manière à pouvoir tourner, par le boîtier du différentiel (1), caractérisé en ce que
un embrayage (8) est disposé entre les engrenages à vis sans fin (2, 3) coaxialement avec les engrenages à vis sans fin (2, 3) pour bloquer ceux-ci l'un à l'autre de manière amovible, l'embrayage (8) comprenant :
une première et une deuxième roues d'engrenage (30, 31; 40, 41) disposées entre lesdits engrenages à vis sans fin, coaxialement avec les engrenages à vis sans fin (2, 3), la première roue d'engrenage (30; 40) étant disposée de manière à tourner avec l'un des engrenages à vis sans fin (2) et la deuxième roue d'engrenage (31; 41) étant disposée de manière à tourner avec l'autre engrenage à vis sans fin (3), et
une bague d'embrayage (32) disposée entre les engrenages à vis sans fin (2, 3) pouvant se déplacer dans la direction axiale des engrenages à vis sans fin (2, 3) et engrenant avec la première et/ou la deuxième roue d'engrenage (30, 31; 40, 41), le mouvement axial de la bague d'embrayage (32) connectant et déconnectant la première et la deuxième roues d'engrenage (30, 31; 40, 41) et bloquant et débloquant de cette manière les engrenages à vis sans fin (2, 3).

2. Mécanisme à engrenages différentiel selon la revendication 1, dans lequel la première et la deuxième roues d'engrenage (30, 31) sont disposées sur le premier et le deuxième engrenages à vis sans fin (2, 3) respectivement.

3. Mécanisme à engrenages différentiel selon la revendication 1, dans lequel les arbres d'essieu (13, 14) traversent les engrenages à vis sans fin (2, 3) et ont des saillies opposées entre les engrenages à vis sans fin (2, 3) et, dans lequel
les roues d'engrenage (40, 41) sont disposées sur les saillies des arbres d'essieu (13, 14).

4. Mécanisme à engrenages différentiel selon la revendication 3, dans lequel les extrémités des essieux (13, 14) sont clavetées et dans lequel les extrémités en saillie clavetées forment les roues d'engrenage (41).

5. Mécanisme à engrenages différentiel selon la revendication 2, 3 ou 4, dans lequel le mécanisme à engrenages différentiel comprend, en outre,
un moyen d'actionnement (9, 19, 26) pour actionner la bague d'embrayage (32) de l'extérieur du boîtier du différentiel (1).

6. Mécanisme à engrenages différentiel selon la revendication 5, dans lequel le moyen d'actionnement comprend :
au moins un élément de levier (19) traversant le boîtier du différentiel (1) et pouvant se déplacer dans la direction axiale de l'engrenage à vis sans fin (2, 3), l'élément de levier (19) ayant une partie terminale ajustée dans une première rainure annulaire (32a) formée dans une face périphérique extérieure de la bague d'embrayage (32) pour permettre la rotation avec glissement entre ces pièces et l'autre partie terminale faisant saillie sur une face périphérique extérieure du boîtier du différentiel (1), et
un élément de bague (9) disposé sur la face périphérique extérieure du boîtier du différentiel (1) pouvant se déplacer dans la direction axiale de l'engrenage à vis sans fin (2, 3) et ne tournant pas avec le boîtier du différentiel (1), l'élément de bague comportant une deuxième rainure annulaire (9a) dans sa face périphérique intérieure et l'autre partie terminale de l'élément de levier (19) étant ajustée dans la deuxième rainure annulaire (9a) pour permettre une rotation avec glissement entre ces pièces.
